# EUROPEAN PATENT APPLICATION

(11) **EP 2 263 886 A1**
(43) Date of publication of application: **22.12.2010**
(21) Application number: 09425231.9
(22) Date of filing: 16.06.2009
(51) Int. Cl.: B60B 3/04

(54) **Wheel disc**

(71) Applicant: GKN FAD S.P.A., 25013 Carpenedolo (Brescia) (IT)
(72) Inventor: Zuccarotto, Vincenzo, 25013 Carpenedolo (Brescia) (IT)
(74) Representative: Lucking, David John

(57) **Abstract**

A wheel disc (10) for a wheel, the disc (10) including a disc axis (A), a central region (12) which includes openings (14) to engage in use with a vehicle hub to mount the wheel on the hub, and a radially outermost region (15) which includes an axially extending flange (18) which in use is secured to a wheel rim, there being a connection portion (20) between the central region (12) and the outermost region (15), the connection portion (20) including a ramp (22) which extends axially and radially from the central region (12) to an axially projecting reinforcing rib formation (25) which includes a first internal radius D1, and the radially outermost region (15) including a support portion (26) which is connected to the flange (18) by a connection which includes an internal radius D2, and the support portion (26) also being connected to the reinforcing rib (25), and wherein the ratio D1/D2 is greater than 65%.

## Description

This invention relates to a wheel disc for a wheel.

Various wheel disc designs are known which include a disc axis, a central region which includes openings to engage in use with a vehicle hub e.g. through mounting bolts, to mount the wheel on the hub, and a radially outermost region which includes an axially extending flange which in use is secured to a wheel rim. There is an annular connection portion between the central region and the outermost region, the connection portion including a ramp which extends axially and radially from the central region to an axially projecting reinforcing rib formation which includes an internal radius, and the radially outermost region including an annular support portion which is connected to the flange by a circumferential connection which includes another internal radius, and the support portion also being connected to the rib formation.

Such wheel discs for automobile use have been made in metal by cold forming, having a material thickness in the order of 4mm. When such wheel discs fail due to fatigue, this is commonly in the areas of the disc which are during manufacture subject to the greatest distortion/thinning, that is for example in the area of the radius of the axially projecting rib portion.

According to a first aspect of the invention we provide a wheel disc for a wheel, the disc including a disc axis, a central region which includes openings to engage in use with a vehicle hub to mount the wheel on the hub, and a radially outermost region which includes an axially extending flange which in use is secured to a wheel rim, there being a connection portion between the central region and the outermost region, the connection portion including a ramp which extends axially and radially from the central region to an axially projecting reinforcing rib formation which includes a first internal radius D1, and the radially outermost region including a support portion which is connected to the flange by a connection which includes an internal radius D2, and the support portion also being connected to the reinforcing rib, and wherein the ratio D1/D2 is greater than 65%.

In effect this means that compared with a similar wheel disc with the same overall outer diameter, and similar central portion diameter, in a wheel disc in accordance with the invention, the reinforcement rib is moved closer towards the flange, such that the radius between the flange and support portion of the outermost portion is increased, and thus the ratio D1/D2 is increased compared with known prior proposals.

It has been found that this reduces stress levels in critical areas of the disc.

Desirably the ratio D1/D2 is about 72%.

In a typical wheel disc, the support portion is provided with a plurality of through apertures to provide for ventilation through the wheel disc. In prior proposed designs, this area too is prone to fatigue failure.

In a preferred embodiment the support portion of the outermost region extends at an angle to a wheel disc radius of greater than 30°, for example about 55°. This has been found to reduce the stress in the support portion compared with previous proposals.

The ramp may have a radius, desirably an internal radius. The ramp radius may be more than 55mm, typically more than 60mm. Yet more preferably the ramp radius is more than 70mm, for example about 90mm.

This has been found to reduce the peak stress in the critical failure areas, and creates improved, i.e. more homogenous, stress distribution through the wheel disc. Also by radiussing the ramp, the critical stress area of the reinforcing rib radius, is moved to an area of the wheel disc which is less thinned during manufacturing by cold forming, namely towards the central region of the wheel disc.

According to a second aspect of the invention we provide a wheel disc for a wheel, the disc including a disc axis, a central region which includes openings to engage in use with a vehicle hub to mount the wheel on the hub, and a radially outermost region which includes an axially extending flange which in use is secured to a wheel rim, there being a connection portion between the central region and the outermost region, the connection portion including a ramp which extends axially from the central region to an axially projecting reinforcing rib formation which includes a first internal radius D1, and the radially outermost region including a support portion which is connected to the flange by a connection which includes an internal radius D2, and the support portion also being connected to the reinforcing rib, and wherein the support portion of the outermost region extends at an angle to a wheel disc radius of greater than 30°.

In a preferred embodiment the ramp has a radius, desirably an internal radius, of more than 55mm. The ratio D1/D2 is preferably greater than 65%.

According to a third aspect of the invention we provide a wheel disc for a wheel, the disc including a disc axis, a central region which includes openings to engage in use with a vehicle hub to mount the wheel on the hub, and a radially outermost region which includes an axially extending flange which in use is secured to a wheel rim, there being a connection portion between the central region and the outermost region, the connection portion including a ramp which extends axially and radially from the central region to an axially projecting reinforcing rib formation which includes a first internal radius D1,
and the radially outermost region including a support portion which is connected to the flange by a connection which includes an internal radius D2, and the support portion also being connected to the reinforcing rib, and wherein the ramp has a radius.

In a preferred embodiment the support portion of the outermost region extends at an angle to a wheel disc radius of greater than 30°.

Embodiments of the invention will now be described with reference to the accompanying drawings in which:-
FIGURE 1 is a cross sectional view through a prior art wheel disc design;
FIGURE 2 is a view similar to figure 1 but of a wheel disc in accordance with the invention;
FIGURE 3 is a perspective view of a weather side of the wheel disc of figure 2;
FIGURE 4 is a perspective view through the wheel disc of figures 2 and 3.

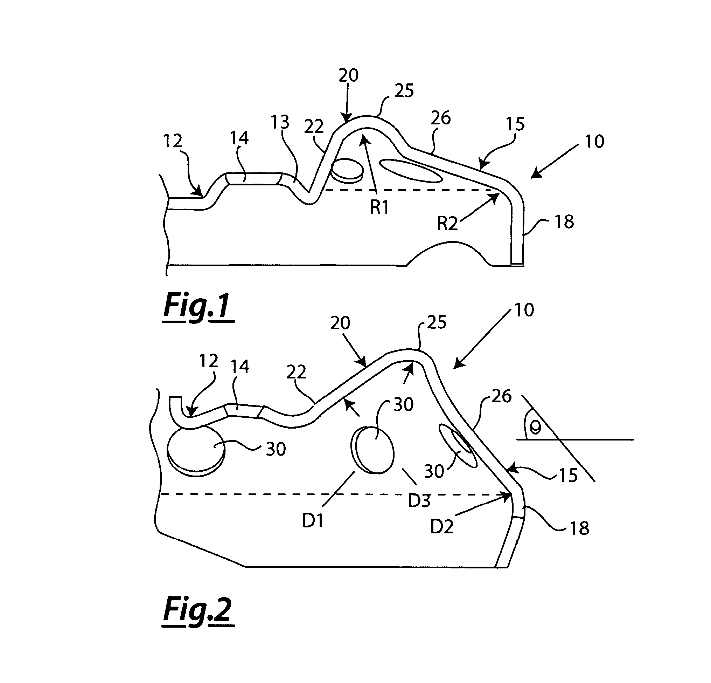

Referring to figure 1 a wheel disc 10 for a wheel is shown, which is made by cold forming in metal. The wheel disc 10 includes a generally circular central region 12 which includes embossed formations 13 with openings 14, through which openings 14 fasteners are in use passed to mount the wheel on a vehicle hub.

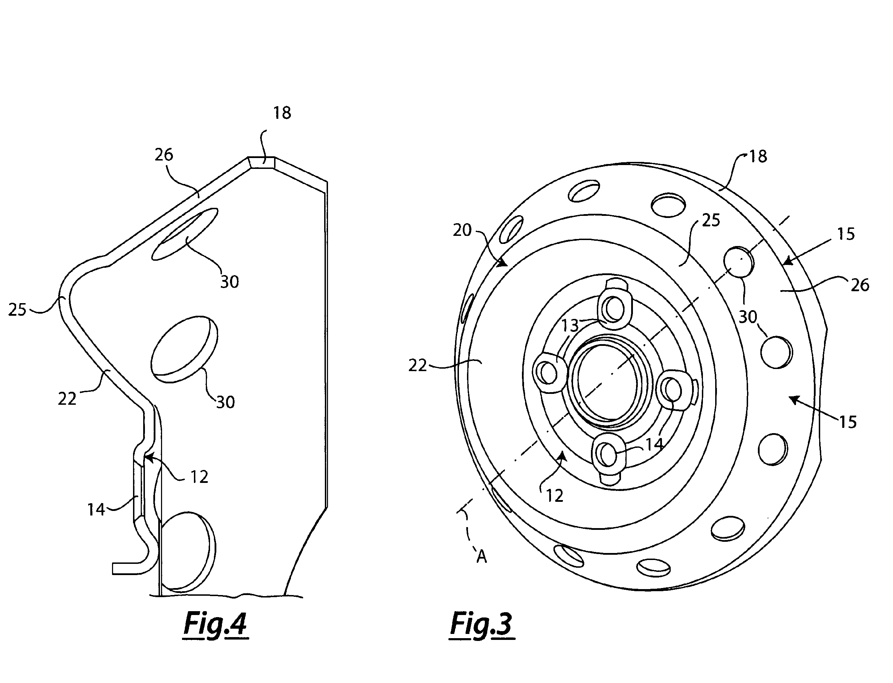

The wheel disc 10 further includes a radially outermost region 15 which includes an axially extending flange 18 i.e. the flange 18 extends axially of the wheel disc 10 in a direction generally parallel to a wheel disc axis A (see figure 3) which is coincident with the wheel axis of rotation.

A circular rim (not shown) of the wheel is in use secured to the flange 18 of the disc 10 e.g. by welding, the rim carrying in use a vehicle tyre (not shown).

Between the central region 12 of the wheel disc 10 and the radially outermost region 15, there is an annular connection portion 20. The connection portion 20 includes a generally planar ramp 22 which extends axially and radially, to an axially projecting circular reinforcing rib formation 25, which has an internal radius R1.

The radially outermost region 15 includes an annular support portion 26 which is connected to the flange 18 at the radially greatest circumference, by a connection which includes an internal radius R2, and to the reinforcing rib formation 25 at the radially least circumference of the support portion 26.

Referring now also to figures 2 to 4, a wheel disc 10 in accordance with the present invention is shown. Similar parts to those of the prior art proposal indicated in figure 1 are indicated by the same references.

It can be seen that in the embodiment of the present invention, the radial position of the reinforcing rib 25 is shifted radially outwardly compared to in the prior proposed wheel disc 10. This has the effect of reducing stresses in the most vulnerable areas of the wheel disc 10 i.e. where during cold forming the wheel disc 10 is subject to most thinning.

This is achieved by increasing the internal radius of the connection between the flange 18 and the support portion 26. In the example of the invention illustrated, where D1 is the internal radius of the reinforcing rib formation 25 and D2 is the radius of the connection between the support portion 26 and the axially extending flange 18, it is arranged that the ratio D1/D2 is greater than 65%. Desirably the ratio D1/D2 is about 72%.

As the radial position of the reinforcing rib 25 is in a disc in accordance with the invention moved radially outwardly relative to the prior proposal, for a wheel disc 10 of the same general dimensions as the prior proposed wheel disc 10 of figure 1, the configuration of the support portion 26 is modified.

Preferably the support portion 26 extends at an angle θ to a wheel disc radius (i.e. the slope of the support portion 26), which is greater than 30°, for example about 55°. This has been found to reduce the stress in the support portion 26 compared with previous proposals, which stress is at least partially due to the formation of a plurality of through apertures 30 in the support portion 26 to provide for ventilation through the wheel disc 10.

Desirably the ramp 22 of the connection portion 20 is in the wheel disc 10 of the invention, not planar, but is provided with a preferably internal, radius D3. The ramp radius D3 is preferably more than 55mm, typically more than 60mm. In the example of the drawings, the ramp radius is more than 70mm, i.e. about 90mm.

This radiussing of the ramp 22 has been found to reduce the peak stress in critical failure areas of the wheel disc 10, and creates improved, i.e. more homogenous, stress distribution through the wheel disc 10. Also by radiussing the ramp 22, the critical stress area of the reinforcing rib 25 is moved from the axially projecting extreme of the reinforcing rib 25, to an area of the wheel disc 10 which is less thinned during manufacturing by cold forming, namely towards the central region 12 of the wheel disc 10.

It will be appreciated that the embodiment of the invention depicted in the drawings is purely exemplarary. The configuration may be changed within the parameters of the invention.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A wheel disc (10) for a wheel, the disc (10) including a disc axis (A), a central region (12) which includes openings (14) to engage in use with a vehicle hub to mount the wheel on the hub, and a radially outermost region (15) which includes an axially extending flange (18) which in use is secured to a wheel rim, there being a connection portion (20) between the central region (12) and the outermost region (15), the connection portion (20) including a ramp (22) which extends axially and radially from the central region (12) to an axially projecting reinforcing rib formation (25) which includes a first internal radius (D1), and the radially outermost region (15) including a support portion (26) which is connected to the flange (18) by a connection which includes an internal radius (D2), and the support portion (26) also being connected to the reinforcing rib (25), and wherein the ratio (D1/D2) is greater than 65%.

2. A wheel disc according to claim 1 wherein the ratio (D1/D2) is about 72%.

3. A wheel disc according to claim 1 or claim 2 wherein the support portion (26) is provided with a plurality of through apertures (30) to provide for ventilation through the wheel disc (10).

4. A wheel disc according to any one of claims 1 to 3 wherein the support portion (26) of the outermost region (15) extends at an angle to a wheel disc (10) radius, of greater than 30°.

5. A wheel disc according to claim 4 wherein the support portion (26) of the outermost region (15) extends at an angle to a wheel disc radius of about 55°.

6. A wheel disc according to any one of the preceding claims wherein the ramp (22) has a radius (D3).

7. A wheel disc according to claim 6 wherein the ramp radius (D3) is an internal radius.

8. A wheel disc according to claim 6 or claim 7 wherein the ramp radius (D3) is more than 55mm, preferably more than 60mm, yet more preferably more than 70mm.

9. A wheel disc according to claim 8 wherein the ramp radius (D3) is about 90mm.

10. A wheel disc according to any one of the preceding claims wherein the wheel disc (10) is manufacturing by cold forming.

11. A wheel disc (10) for a wheel, the disc (10) including a disc axis (A), a central region (12) which includes openings (14) to engage in use with a vehicle hub to mount the wheel on the hub, and a radially outermost region (15) which includes an axially extending flange (18) which in use is secured to a wheel rim, there being a connection portion (20) between the central region (12) and the outermost region (15), the connection portion (20) including a ramp (22) which extends axially and radially from the central region (12) to an axially projecting reinforcing rib formation (25) which includes a first internal radius (D1), and the radially outermost region (15) including a support portion (26) which is connected to the flange (18) by a connection which includes an internal radius (D2), and the support portion (26) also being connected to the reinforcing rib (25), and wherein the support portion (26) of the outermost region (15) extends at an angle to a wheel disc radius greater than 30°.

12. A wheel disc (10) for a wheel, the disc (10) including a disc axis (A), a central region (12) which includes openings (14) to engage in use with a vehicle hub to mount the wheel on the hub, and a radially outermost region (15) which includes an axially extending flange (18) which in use is secured to a wheel rim, there being a connection portion (20) between the central region (12) and the outermost region (15), the connection portion (20) including a ramp (22) which extends axially and radially from the central region (12) to an axially projecting reinforcing rib formation (25) includes a first internal radius (D1), and the radially outermost region (15) including a support portion (26) which is connected to the flange (18) by a connection which includes an internal radius (D2), and the support portion (26) also being connected to the reinforcing rib (25), and wherein the ramp (22) has a radius.
